(19) Europäisches Patentamt / European Patent Office / Office européen des brevets

(11) **EP 2 870 879 B1**

(12) **EUROPEAN PATENT SPECIFICATION**

(45) Date of publication and mention
of the grant of the patent:
**08.05.2019 Bulletin 2019/19**

(21) Application number: **13816073.4**

(22) Date of filing: **08.07.2013**

(51) Int Cl.:
*A21D 2/14* (2006.01)     *A21D 2/18* (2006.01)
*A21D 6/00* (2006.01)     *A21D 13/00* (2017.01)
*A23L 29/269* (2016.01)   *A21D 8/04* (2006.01)
*A21D 10/00* (2006.01)

(86) International application number:
**PCT/JP2013/068628**

(87) International publication number:
**WO 2014/010548 (16.01.2014 Gazette 2014/03)**

(54) **FOOD PROPERTY IMPROVING AGENT**

MITTEL ZUR VERBESSERUNG VON LEBENSMITTELEIGENSCHAFTEN

SUBSTANCE AMÉLIORANTE DE PROPRIÉTÉ ALIMENTAIRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.07.2012 JP 2012154079**

(43) Date of publication of application:
**13.05.2015 Bulletin 2015/20**

(73) Proprietor: **MC Food Specialties Inc.
Tokyo 100-0006 (JP)**

(72) Inventors:
• **FUJIMOTO Akihito**
**Inashiki-gun**
**Ibaraki 300-0398 (JP)**
• **ITOU Madoka**
**Inashiki-gun**
**Ibaraki 300-0398 (JP)**
• **SUKEGAWA Daiki**
**Inashiki-gun**
**Ibaraki 300-0398 (JP)**
• **SUDO Masako**
**Inashiki-gun**
**Ibaraki 300-0398 (JP)**
• **ITO Takayuki**
**Inashiki-gun**
**Ibaraki 300-0398 (JP)**

(74) Representative: **Hoffmann Eitle
Patent- und Rechtsanwälte PartmbB
Arabellastraße 30
81925 München (DE)**

(56) References cited:
EP-A1- 0 790 003     JP-A- H 089 872
JP-A- H0 638 665     JP-A- H1 084 846
JP-A- S63 251 036    JP-A- 2006 180 724
US-A- 2 983 613      US-A- 3 556 805
US-A- 4 109 023

**Description**

CROSS-REFERENCE TO RELATED APPLICATION

The present patent application claims priority to Japanese Patent Application No. 2012-154079 filed on July 9, 2012.

BACKGROUND OF THE INVENTION

[Technical Field]

The present invention relates to a food property improving agent as claimed comprising one or more organic acids selected from the group consisting of acetic acid, fumaric acid and succinic acid and dextran, and to a food product In which the food property improving agent is added.

[Related Art]

Texture is one of important elements of good taste of bread. In particular, the texture of toast bread is often evaluated in view of "softness" and "moist texture" felt when the toast bread Is touched, "crispness" and "meltability (or "no-lumpiness" and "suppressed stickiness")", and the like felt In the mouth.

There are many reports for texture improvement of bread. For example, there are many reports showing that dextran, an extracellular polysaccharide derived from lactic acid bacteria, has a texture improvement effect for bread (see Japanese Patent Application Laid-Open Publication No. 2006-180724 (patent document 1), Japanese Patent Application Laid-Open Publication No. H8-9872 (patent document 2), and Japanese Patent Application Laid-Open Publication No. H6-38665 (patent document 3)). It is known for a long time that dextran is produced by <u>Leuconostoc mesenteroides</u>, which Is one of lactic acid bacteria. Currently marketed main dextrans are powdered dextrans in which dextrans obtained by fermentation of lactic acid bacteria on a medium containing sucrose are fractionated or purified, or liquid dextrans in which lactic acid bacteria are fermented using wheat flour substrates.

On the other hand, there are reports showing that use of dextrans makes pre-baking dough harder and causes difficulty in handling the dough. It is also known that dextrans have various effects based on the molecular weight distribution and the amount added to bread (see (non-patent document 1) Ross, A., McMaster, G., Tom Linson, J., Cheetham, N., 1992. Effect of dextrans of differing molecular weights on the rheology of wheat flour doughs and the quality characteristics of pan and Arabic breads. J. Sci. Food Agric. 60, 91-98.).

In addition, when a liquid product obtained by fermentation in a wheat flour substrate using lactic acid bacteria which produce dextrans is added to bread dough, lactic acid and dextran can coexist in the product. However, since the amount of the liquid product added to the bread dough is restricted due to breadmaking problems, there is a limit in the coexisting amount of lactic acid and dextran, which is also associated with a low content of dextran in the liquid product itself. In addition, because of the liquid product, cooling or freezing is necessary in order to preserve the liquid product. Thus, there were constraints in the facility.

RELATED ART DOCUMENTS

[Patent Documents]

Patent document 1: Japanese Patent Application Laid-Open Publication No. 2006-180724
Patent document 2: Japanese Patent Application Laid-Open Publication No. H8-9872
Patent document 3: Japanese Unexamined Patent Application Laid- Open Publication No. H6- 38665
Patent document 4, EP 0790003, refers to a process for obtaining improved structure build-up of baked products.
Patent document 5, US 2983613, refers to the addition of dextran to bread doughs.
Patent document 6, US 4109023, refers to a porous yeast leavened dough product.
Patent document 7, US 3556805, refers to the reduction of mixing requirements for yeast leavened bread dough.
Patent document 8, JP H10 84846, refers to bread suitable for heating with microwave oven.
Patent document 9, JP S63 251036, refers to an enhancement method for improving the function of wheat gluten in bread production.

# EP 2 870 879 B1

[Non-Patent Document]

Non-patent document 1: Ross, A., McMaster, G., Tom Linson, J., Cheetham, N., 1992. Effect of dextrans of differing molecular weights on the rheology of wheat flour doughs and the quality characteristics of pan and Arabic breads. J. Sci. Food Agric. 60, 91-98.

## SUMMARY OF THE INVENTION

[Problems to be Solved by the Invention]

Now, the present inventors have unexpectedly found that, when one or more kinds of organic acids selected from the group consisting of acetic acid, fumaric acid and succinic acid and dextran are combined at particular concentrations, physical properties of a food product, particularly a cereal-containing food product such as bread is preferably improved. In addition, when a combination of them is added to bread dough, the present inventors succeeded to produce bread having softness, moist texture, and resistance to the formation of lumps and suppressed stickiness in the mouth, that are better than those of bread produced without the addition of the combination of them. The present invention is based on these findings.

Specifically, an object of the present invention is to provide a food property improving agent capable of improving physical properties of a food product, particularly to provide a food property improving agent capable of improving softness, moist texture, favorable meltability (resistance against forming lumps and suppressed stickiness in the mouth), and favorable crispness of a food product, especially a cereal-containing food product such as bread, and to provide a food product having improved physical properties.

[Means of Solving the Problems]

The present invention will provide the embodiments described below.

[1] A food property improving agent comprising one or more kinds of organic acids selected from a group consisting of acetic acid, fumaric acid, and succinic acid at a total of 0.5 to 5 mass% and dextran at 0.5 to 15 mass%.

[2] The food property improving agent according to [1], wherein an average molecular weight of the dextran is 60,000 to 4,000,000.

[3] The food property improving agent according to [1] or [2], containing sourdough.

[4] The food property improving agent according to [3], wherein the sourdough is obtained by lactic acid fermentation performed by one or more kinds of lactic acid bacteria selected from the group consisting of genus Weissella, genus Pediococcus and genus Leuconostoc.

[5] A food dough,

a) to which the food property improving agent according to any one of [1] to [4] is added, or
b) containing one or more kinds of organic acids selected from the group consisting of acetic acid, fumaric acid and succinic acid at a total of 0.025 to 0.5 mass% in baker's percentage, and dextran at 0.025 to 1.5 mass% in baker's percentage.

[6] A food product obtained by heating the dough according to [5].

[7] A method for producing a food product in which physical properties of the food product are improved, comprising a step of adding the food property improving agent according to any one of [1] to [4] to the food product.

[8] A method for improving physical properties of a food product, comprising adding the food property improving agent according to any one of [1] to [4] to the food product.

(1) A food property improving agent comprising one or more kinds of organic acids selected from the group consisting of acetic acid, fumaric acid, and succinic acid at a total of 0.5 to 5 mass% and dextran at 0.5 to 15 mass%.
(2) The food property Improving agent according to (1), wherein an average molecular weight of the dextran is 60,000 to 4,000,000.

(3) The food property improving agent according to (1) or (2), further containing a sourdough.

(4) The food property improving agent according to (3), wherein the sourdough is obtained by lactic acid fermentation performed by one or more kinds of lactic acid bacteria selected from the group consisting of genus Weissella, genus Pedlococcus and genus Leuconostoc.

(5) A food dough in which any one of the food property improving agents according to (1) to (4) Is added.

(6) A food dough containing one or more kinds of organic acids selected from the group consisting of acetic acid, fumaric acid and succinic acid at a total of 0.025 to 0.5 mass% in baker's percentage, and dextran at 0.025 to 1.5 mass% in baker's percentage.

(7) A food product obtained by heating the dough according to (5) or (6).

(8) A method for producing a food product In which physical properties of the food product are Improved, comprising a step of adding the food property improving agent according to any one of (1) to (4) to the food product.

(9) A method for Improving physical properties of a food product, comprising adding the food property Improving agent according to any one of (1) to (4) to the food product.

[Effect of the Invention]

According to the present invention, there is provided a food property improving agent as claimed capable of improving physical properties of a food product, particularly to provide a food property improving agent capable of improving softness, moist texture, favorable meltability (resistance against forming lumps and suppressed stickiness in the mouth), and favorable crispness of a food product, especially a cereal-containing food product such as bread, and to provide a food product having improved physical properties.

DETAILED DESCRIPTION OF THE INVENTION

Food property improving agent

The food property improving agent of the present invention comprises one or more kinds of organic acids selected from the group consisting of acetic acid, fumaric acid and succinic acid at total 0.5 to 5 mass% and dextran at 0.5 to 15 mass%.

The organic acid used in the present invention is selected from the group consisting of acetic acid, fumaric acid and succinic acid. One kind of them may be used alone, or a combination of two or more kinds of them may be used. In view of a large effect of texture improvement, acetic acid and succinic acid are preferable as the organic acid, and acetic acid is more preferable. The organic acid may be a free acid or a salt, such as a sodium salt and a potassium salt. In addition, the organic acid may be a synthetic product, or a product produced by a lactic acid bacterium described later.

The dextran used in the present invention may be powdered dextran in which dextrans obtained by fermentation of a lactic acid bacterium on a medium containing sucrose are fractionated or purified, a commercial product such as liquid dextran in which a lactic acid bacterium is fermented in a wheat flour substrate, or a cultured product of a lactic acid bacterium producing dextrans. It is preferable to use the dextran produced by the lactic acid bacterium described later.

The dextran used in the present invention has a mass average molecular weight (Mw: average molecular weight) of preferably 60,000 to 4,000,000, more preferably 60,000 to 3,000,000, and furthermore preferably 1,000,000 to 3,000,000.

Here, the average molecular weight of the dextran can be measured by gel filtering chromatography using liquid chromatography.

According to an embodiment of the present invention, the food property improving agent of the present Invention is prepared as a combination (mixture) obtained by mixing one or more kinds of organic acids selected from the group consisting of acetic acid, fumaric acid and succinic acid, and dextran at particular concentrations.

In the food property improving agent of the present invention, the total concentration of the one or more kinds of the organic acids selected from the group consisting of acetic acid, fumaric acid and succinic acid is 0.5 to 5 mass%, preferably 0.5 to 4 mass%, more preferably 0.7 to 4 mass%, and furthermore preferably 0.8 to 3 mass%.

Here, concentrations of acetic acid, fumaric acid and succinic acid in the food property Improving agent of the present invention can be measured by capillary electrophoresis method or high performance liquid chromatography method. Concentrations of fumaric acid and succinic acid can be measured similarly to a method for measuring the concentration of acetic acid.

In the case of capillary electrophoresis method, the concentration of acetic acid is obtained by measuring sample (food property Improving agent) aqueous solution under the following conditions. For example, the sample (food property improving agent) aqueous solution diluted 5 times by ion exchanged water is passed through a 0.45 $\mu$m

membrane filter. Then, the measurement is performed using a capillary electrophoresis apparatus (model name: HEWLETT PACKARD 3D CE), which Is a product by Agilent Technologies (Agilent Technologies Innovating the HP way), in which a capillary column (50 $\mu$m $\times$ 104 cm) having a total length of 112.5 cm filled with fused silica is used together with Agilent Plating Bath Buffer as buffer under the conditions including a capillary temperature of 15°C, a voltage of negative 30 kV, and a measurement wavelength of 350.20 nm (reference 230.10 nm).

In the case of the high performance liquid chromatography method, the concentration of acetic acid is obtained by, for example, a method as the following. The sample (food property improving agent) aqueous solution diluted 5 times by Ion exchanged water is subjected to centrifugal separation (10000 rpm, 5 minutes). A 1-mL aliquot of the supernatant is collected and 20 $\mu$L of 20% sulfosalicylic acid Is added to the supernatant with stirring. After being passed through a 0.45 $\mu$m filter, the resultant is subjected as an analytical sample to the organic acid analysis using high performance liquid chromatography (HPLC) under the following conditions.

Column: Organic Acid Column (7.8 $\times$ 300 mm) Waters Column temperature: 40°C
Solvent: A buffer phase (9.51 g of p-toluenesulfonic acid is dissolved In distilled water to a total of 100 mL), and B moving phase (9.51 g of p-toluenesulfonic acid, 41.85 g of Bls-Tris, and 0.29 g of EDTA-2Na are dissolved In distilled water to a total of 100 mL).
Flow rate: 0.8 mL/minute for A and B
Detector: RI detector

The concentration of the dextran contained in the food property Improving agent of the present Invention is 0.5 to 15 mass%, preferably 0.5 to 10 mass%, more preferably 0.6 to 10 mass%, and furthermore preferably 0.6 to 7 mass%.

Here, the concentration of the dextran contained in the food property improving agent of the present invention can be calculated by first removing starch, oligosaccharides, and the like from the food property improving agent using centrifugal separation or the like, subjecting the resultant material to specific enzymatic decomposition using dextranase, and then measuring the amount of generated glucose.

Specifically, the dextran concentration can be measured by the following method.

A 1-g aliquot of a freeze-dried food property improving agent is weighed as a sample (food property improving agent) and put it in a 50 mL volume centrifugation tube, and 10 mL of 50 volume% ethanol is poured in the centrifugation tube. After stirring, the resultant material is boiled at 100°C for 5 minutes, and subjected to cooling operations twice with cooling water to adjust the temperature to 20 to 28°C. The solution obtained is subjected to centrifugal separation (3000 rpm for 10 minutes), and the precipitate is collected. After 20 mL of 50 volume% ethanol is poured and stirred, the resultant solution is boiled at 100°C for 5 minutes and subjected to centrifugal separation (3000rpm for 10 minutes) and the precipitate is collected. A 20-mL aliquot of citrate buffer solution is poured to the precipitate, the resultant solution is boiled at 100°C for 5 minutes, and subjected to centrifugal separation (3000rpm for 10 minutes). Then, the supernatant is divided into two parts in an equal amount and put them in two test tubes. Then, 2.5 mL of glycosidase solution is added to one of the purified samples obtained as described above and the resultant is referred to as solution A. A 2.5-mL aliquot of a mixed solution of dextranase and glycosidase is added to the other one of the purified samples obtained as described above and the resultant is referred to as solution B. The solution A and the solution B are each subjected to enzyme reaction at 30°C for 48 hours. After the reaction, the amounts of glucose contained in each of the samples are quantified by Glucose Kit CII Test Wako (produced by Wako Pure Chemical Industries, Ltd.). The measured amounts are substituted in the following equation to convert the result into the dextran amount (mass%).

The amount of dextran (mass%) contained in the food property improving agent = {(glucose mass in solution B - glucose mass in solution A) $\times$ 10 $\times$ 0.9 $\times$ 2/500} $\times$ 100

The total concentration of the one or more kinds of organic acids, contained in the food property improving agent of the present invention, selected from the group consisting of acetic acid, fumaric acid and succinic acid, is 0.5 to 5 mass%, preferably 0.5 to 4 mass%, more preferably 0.7 to 4 mass%, and furthermore preferably 0.8 to 3 mass%. The concentration of the dextran contained in the food property improving agent of the present invention is 0.5 to 15 mass%, preferably 0.5 to 10 mass%, more preferably 0.6 to 10 mass%, and furthermore preferably 0.6 to 7 mass%.

The food property improving agent of the present invention contains one or more kinds of organic acids selected from the group consisting of acetic acid, fumaric acid and succinic acid, as the total amount of the organic acids relative to 100 mass part of the dextran, 3 to 1000 mass part, preferably 5 to 800 mass part, further preferably 7 to 240 mass part, more preferably 11 to 180 mass part, furthermore preferably 20 to 100 mass part, moreover preferably 30 to 100 mass part, and most preferably 50 to 100 mass part.

According to an embodiment of the present invention, the food property improving agent of the present invention can be prepared as a mixture by adding as necessary, one or more kinds of organic acids selected from the group consisting of acetic acid, fumaric acid and succinic acid and/or dextran to sourdough to a desired concentration. Namely, according to a preferable embodiment of the present invention, the food property improving agent of the present invention contains sourdough.

Specifically, for preparing the food property improving agent of the present invention, dextran and, as necessary, one or more kinds of organic acids selected from the group consisting of acetic acid, fumaric acid and succinic acid may be added to the sourdough containing these one or more kinds of organic acids to a desired concentration. Alternatively, the one or more kinds of organic acids and, as necessary, dextran may be added to the sourdough containing dextran to a desired concentration. Alternatively, sourdough containing both of one or more kinds of organic acids selected from the group consisting of acetic acid, fumaric acid and succinic acid and dextran may be used as the food property improving agent of the present invention, or the one or more kinds of organic acids and/or the dextran is further added to prepare the agent having a desired concentration.

Here, the sourdough is also called as sawa-dou (sourdough), and means a fermented product favorably used as a raw material in breadmaking and confectionery production. Traditional sourdough is a fermented product derived from plant raw materials and produced by using yeast living on cereals, fruits and the like, or a plurality of lactic acid bacteria.

The sourdough used in the present invention means a cultured product or fermented product obtained by fermenting a mixture of cereal flour or an enzyme treatment product of the cereal flour, yeast or lactic acid bacteria, and water. The sourdough may be a liquid form, a paste form, a dough form or a solid form. The sourdough used in the present invention preferably contains cultured liquid and fermented product of yeast or lactic acid bacteria capable of producing the one or more kinds of organic acids selected from the group consisting of acetic acid, fumaric acid and succinic acid and/or dextran. In short, it contains the one or more kinds of organic acids selected from the group consisting of acetic acid, fumaric acid and succinic acid and/or dextran.

Specifically, the sourdough used in the present invention may be a fermented product obtained by adding lactic acid bacteria capable of producing the one or more kinds of organic acids selected from the group consisting of acetic acid, fumaric acid and succinic acid and/or dextran and ,if necessary, water, to a raw material of cereal flour or an enzyme treatment product of the cereal flour, and subjecting the resultant mixture to culturing under stationary conditions or in mixing at pH of 4.5 or less at 15 to 40°C (preferably 25 to 35°C) for 3 hours to 5 days (preferably 12 to 72 hours). As for the lactic acid bacteria, one kind of bacteria may be cultured, or more than one kind of bacteria may be combined and co-cultured. In addition, microorganisms such as yeast may be properly used in co-culturing.

Here, the cereal flour means flour obtained from cereals such as wheat, rice, barley, rye or a combination (mixture) of them. The cereal flour is preferably wheat flour, and includes strong flour, semi-strong flour, medium strong flour and weak flour.

The enzyme treatment product of cereal flour may be, for example, cereal flour treated with amylase or protease.

The lactic acid bacteria capable of producing the one or more kinds of organic acids selected from the group consisting of acetic acid, fumaric acid and succinic acid and/or dextran are not limited, but may be, for example, genus Weissella, genus Pediococcus, or genus Leuconostoc. For example, W. confusa can be cited as a species of genus Weissella, and Ped. pentosaceus can be cited as a species of genus Pediococcus. Among them, genus Weissella is preferable and W. confusa is more preferable because it has high ability of producing dextran.

The sourdough used in the present invention is preferably obtained by lactic acid fermentation of lactic acid bacteria, and is preferably obtained by lactic acid fermentation of one or more kinds of lactic acid bacteria selected from the group consisting of genus Weissella, genus Pediococcus, and genus Leuconostoc. Specifically, according to an embodiment of the present invention, the food property improving agent of the present invention contains a lactic acid bacterium fermented product.

The food property improving agent containing the lactic acid bacterium fermented product can attain higher flavor improvement effect, besides the texture improvement effect of the food property improving agent of the present invention.

As for the sourdough of the present invention, besides cereal flour or an enzyme treatment product thereof as a raw material, as necessary, carbon source such as sucrose, glucose and the like; nitrogen source such as ammonium salt, nitrate, and casein digest products and the like; inorganic substance such as sodium chloride, potassium chloride, calcium chloride, magnesium sulfate, calcium carbonate, potassium monohydrogen phosphate, potassium dihydrogen phosphate, magnesium phosphate, potassium phosphate, ferrous sulfate, calcium chloride, manganese sulfate, zinc sulphate, copper sulfate and the like; vitamins such as pantothenic acid, biotin, thiamin, nicotinic acid and the like; amino acids such as alanine, glutamic acid and the like; organic acids other than citric acid; and the like may be added and may be subjected to fermentation by lactic acid bacteria.

The sourdough used in the present invention may contain extracellular polysaccharides other than dextran. The extracellular polysaccharide other than dextran means a polymer polysaccharide consisting of glucose as a main component, for example, excreted outside the cell by microorganisms such as lactic acid bacteria. The polymer polysaccharide includes a high molecular polysaccharide which contains fructose in the part and contains 1,6-linkage, 1,3-linkage, or 1,4-linkage. For example, fructan, reuteran and alternan can be cited.

The concentration of the extracellular polysaccharide other than dextran in the sourdough of the present invention can be properly adjusted insofar as a desired food product physical property improvement effect of the present invention is obtained.

Here, the concentration of the extracellular polysaccharide in the sourdough can be calculated first by removing starch, oligosaccharides, and the like from a sample before culturing lactic acid bacteria and a sample after culturing lactic acid bacteria, by subjecting to freeze-dry treatment, weighing, and detecting the difference between the sample after the culturing treatment and the sample before the culturing treatment.

Specifically, the concentration can be measured by the following method.

Two 5-g aliquoits each of the samples before and after the culturing treatment of the food property improving agent are weighed and each put into 50-mL-capacity centrifugation tubes, and 5 mL of 100 volume% ethanol is poured to the centrifugation tubes. After stirring, each resultant mixture is boiled at 100°C for 5 minutes, and subjected to cooling operations with cooling water twice. Next, the mixture is subjected to centrifugal separation (3000 rpm, for 10 minute), and precipitate is collected. The precipitate obtained is subjected to freeze-dry operation again. After the precipitate is weighed, the concentration of the extracellular polysaccharide in the food property improving agent is calculated by the following equation.

$$\text{Concentration of extracellular polysaccharide (\%) in food property improving agent} = \{(\text{mass of sample after the culturing treatment} - \text{mass of sample before the culturing treatment})/5\} \times 100$$

The mixture obtained by the above-described preparation method may be used directly as the food property improving agent. Alternatively the mixture may be subjected to concentration treatment, heating treatment, drying treatment such as hot air drying, steam drying, freeze drying, spray drying and the like, separation purification treatment, discoloration treatment and the like, and the concentrated product or the dried product may be used as the food property improving agent.

In the case of a mixture containing sourdough, the mixture in which the activity of the lactic acid bacteria is deactivated by heating, adjusting salt concentration, adjusting pH, and the combination thereof is preferably used. The method for deactivating the lactic acid bacteria can be properly selected based on the amount of the target sourdough and the kind of the lactic acid bacteria. For example, when a combination of salt concentration adjustment and pH adjustment is used, the method can be performed under conditions in which the salt concentration is 5 mass% and pH is 4.1 or less, preferably 3.7 or less, and more preferably 3.2 or less.

The food property improving agent of the present invention may be a liquid form, a paste form, or a solid form. In the case of the solid form, it may be a powder form, a granular form, a capsule form, or a block form. In the case of the liquid form, the solvent may be water, an organic solvent such as alcohol (for example, ethyl alcohol), or liquid substance such as liquid sugar.

The food property improving agent of the present invention may contain, as necessary, inorganic salts such as sodium chloride, potassium chloride, ammonium chloride and the like; nucleic acids such as sodium inosinate, sodium guanylate and the like; organic acids such as lactic acid, propionic acid and the like; vitamins such as vitamin B1, vitamin B2, vitamin C, vitamin E and the like; alcohol such as ethanol, glycerol and the like; saccharides such as sucrose, glucose, maltose, lactose and the like; polysaccharide thickener such as gum arabic, alginic acid, carrageenan, xanthan gum, gum guaiac, tamarind gum, pectin and the like; diluents such as dextrin, various starches and the like; and other component such as amino acid, emulsifier, flavoring agent, oils and fats, antioxidant, preservative, functional material, and the like. One kind of them may be used alone, or a combination of two kinds or more may be used.

Use (food product physical property improvement effect)

When the food property improving agent of the present invention is added to a food product, physical properties of the food product can be improved. In addition, the food property improving agent of the present invention can be used as a flavor improving agent. Further, the food property improving agent of the present invention is preferably a food texture improving agent, and preferably a cereal-containing food product (preferably bread) texture improving agent.

In this specification, the "texture improvement effect" means to improve, modify or upgrade the satisfactory texture of bread such as "softness", "moist texture", "satisfactory meltability (resistance against formation of lumps and suppressed stickiness in the mouth,)", "satisfactory crispness" and the like of a food product, for example, cereal-containing food products such as bread to a desired texture, or means to increase the satisfactory texture to a desired level.

In this specification, the "flavor improvement effect" means to improve, modify or upgrade the flavor such as "sweet smell", "acid smell", "alcohol smell", "taste", and the like in a food product, for example, cereal-containing food products such as bread to a desired flavor, or means to increase the flavor to a desired level.

According to an embodiment of the present invention, a physical property improvement method for a food product is provided which includes adding a food property improving agent as claimed to a food product, preferably a texture improvement method is provided in which a food texture improving agent is added to a food product, more preferably a texture improvement method for a cereal-containing food product (preferably bread) is provided which includes adding a texture improving agent for a cereal-containing food product (preferably bread) to a cereal-containing food product (preferably bread).

In addition, according to another embodiment of the present invention, a food product is provided in which physical properties are improved by the physical property improvement method of the present invention. Further, according to another embodiment of the present invention, a method for producing a food product whose physical properties are improved is provided, which includes a step of adding the food property improving agent as claimed to the food product, preferably a method for producing a food product whose texture is improved is provided, which includes a step of adding the food texture improving agent to the food product, more preferably a method for producing a cereal-containing food product (preferably bread) whose texture is improved is provided, which includes a step of adding the texture improving agent for a cereal-containing food product (preferably bread) to the cereal-containing food product (preferably bread).

A method for adding the food property improving agent of the present invention to a food is not particularly limited. For example, it may be added as a part of raw materials when a food product is produced, or it may be added after it is mixed with other raw materials. The timing of addition is not particularly limited, but the addition is preferably performed before or during mixing raw materials in view of the possibility of attaining good mixing in the food product.

The amount of addition of the physical property improving agent of the present invention to a food product is not particularly limited. One of ordinary skill in the art can properly select the amount depending on the kinds and properties of the food product. In baker's percentage, it is, for example, preferably 0.5 to 10 mass%, more preferably 0.5 to 7 mass%, and further preferably 1 to 7 mass%. Here, the baker's percentage is generally used as a method of indicating a blending amount in cereal flour dough, and means a mass ratio (%) of each material other than cereal flour when the total mass of the blended cereal flour is set as 100%. The baker's percentage is also referred to as a percentage relative to flour.

The food product to which the food property improving agent of the present invention is added is not limited insofar as improvement in the properties is desired, but the food product is preferably produced through heating treatment, and is more preferably a cereal-containing food product produced through a heating step, such as baking, cooking with oil, or steaming. The cereal-containing food product produced through the heating step is a food product, such as bread (including sweet roll), confectioneries and noodles, which contain a cereal product including wheat flour and the like as main raw materials, and whose production method includes a heating step. The cereal-containing food product produced by a method including a heating step is preferably bread or confectionery, more preferably bread, further preferably fermented bread.

In the case where the food product is produced by a method including a heating treatment, the food property improving agent of the present invention may be added to dough before the heating treatment. Specifically, according to an embodiment of the present invention, the food property improving agent of the present invention is added to the food dough of the present invention. By adding the food property improving agent of the present invention to dough, physical properties of the dough can be improved. Specifically, extensibility of the dough can be improved, and the voluminous feeling of a food product, such as bread, after the heating treatment is improved. Thus, the food property improving agent of the present invention can be used as a dough improving agent. Here, the extensibility of dough can be calculated by, for example, loading the food dough after the bench time to a breadmaking molder, and measuring the length of the dough at that time. Otherwise, the extensibility can be measured using an extensograph and the like.

In a preferable embodiment of the present invention, the food dough of the present invention contains a total of 0.025 to 0.5 mass%, in the baker's percentage, of one or more kinds of organic acids selected from the group consisting of acetic acid, fumaric acid and succinic acid, and contains 0.025 to 1.5 mass% of dextran in the baker's percentage. In a more preferable embodiment, the food dough of the present invention contains a total of 0.025 to 0.35 mass%, in the baker's percentage, of one or more kinds of organic acids selected from the group consisting of acetic acid, fumaric acid and succinic acid, and contains 0.025 to 1 mass% of the dextran in the baker's percentage. In a furthermore preferable embodiment, the food dough of the present invention contains a total of 0.05 to 0.35 mass% of one or more kinds of organic acids selected from the group consisting of acetic acid, fumaric acid and succinic acid, and contains 0.05 to 1 mass% of dextran in the baker's percentage.

The food dough of the present invention is obtained preferably by subjecting dough to a fermentation treatment. By the fermentation treatment, it is possible to prepare a food product in which softness, moist texture, resistance to the formation of lumps in the mouth, and reduction of stickiness are improved.

According to an embodiment of the present invention, the food product of the present invention is obtained by subjecting the dough of the present invention to a heating treatment, such as baking, cooking with oil, or steaming. Specifically, the food product includes a baked product, such as baked bread, nan, pie, pizza, cake, hotcake, cookie, cracker, and the like, and a product cooked with oil, such as fried bread, fried doughnut, and the like, and a steamed product, such as steamed bread, manju, and the like. Besides them, the food product includes a boiled food product, such as boiled bread (for example, knedliky), noodle (for example, pasta), and the like, a heated product using electromagnetic waves, such as a microwave oven, and the like, a product subjected to a preparation method similar to those methods, and a product (for example, bagel) subjected to a combination of cooking methods mentioned above.

In the following, toast bread which is one of food products is illustrated as an exemplary food, and a method for producing the toast bread is exemplified.

As to the method for producing toast bread of the present invention, a usual method for producing fermented bread, other than adding the food property improving agent of the present invention to bread dough, is used.

A method for producing fermented bread is not particularly limited. As the typical method, a straight method and a sponge and dough method can be cited.

In the straight method, all raw materials for breadmaking cereal flour dough (hereinafter also referred to as bread dough) are mixed at one time to make and ferment dough. Specifically, after mixing all raw materials for the bread dough, the mixture is fermented at 25 to 30°C, divided, subjected to a benching treatment, formed, packed, subjected to the final proof treatment (at 25 to 42°C), and then subjected to a baking treatment (at 170 to 240°C).

In the sponge and dough method, the fermentation treatment is divided into two steps. First, yeast and water are added to a part of cereal flour to make and ferment sponge. Next, the remaining raw materials for bread dough are combined to the fermented sponge so as to ferment the combination. Specifically, water is added at 30 to 100 mass% of cereal flour, yeast, and yeast food, relative to a total amount of cereal flour to be used, with mixing to obtain sponge, the sponge is fermented at 25 to 35°C for 1 to 5 hours, and the remaining raw materials for bread dough are added, the combined raw materials are subjected to a mixing (kneading) treatment, a floor time treatment, division, a bench time treatment, forming, and packing. The baking treatment is performed (at 170 to 240°C) after the final proof treatment (25 to 42°C).

As the raw materials for bread dough, yeast, salt and water, and sugar, powdered skim milk, eggs, yeast foods, shortening, butter and the like as necessary, are used besides cereal flour (generally, wheat flour).

The food property improving agent of the present invention can be added at any time during bread production steps insofar as the addition is performed before a heating treatment such as baking, cooking with oil, and steaming. For example, in the straight method, the food property improving agent may be added to raw materials for bread dough to prepare bread dough, or may be added at the time of the mixing treatment after all the raw materials for bread dough are mixed. In the sponge and dough method, the food property improving agent may be added to raw materials used to make sponge, may be added at the time of mixing sponge, or may be added to bread dough at the kneading time after the sponge is made.

In addition, according to another embodiment of the present invention, the physical property improvement method for a food product and the method for producing a food product in the present invention may include adding the one or more kinds of organic acids selected from the group consisting of acetic acid, fumaric acid and succinic acid, dextran, which are ingredients of the food property improving agent of the present invention, and sourdough as necessary to a food product, without combining them (without mixing them) in advance. Further, these methods may include further adding other components that are allowed to be contained in the food property improving agent of the present invention.

These components may be added as needed to a food product regardless of the order, or may be added together at one time. For example, when the food product is a cereal-containing food product produced by a method including a heating step, a method may be used in which the organic acids of the present invention are added to the raw materials for dough and then the remaining components may be added, or several kinds of dough each prepared by the addition of individual component are mixed, so as to contain the organic acids and dextran used in the present invention at desired baker's percents. Similarly to the timing of adding the above-described food property improving agent, the timing of adding these components to a food product may be performed at any time insofar as the addition is performed before the heating treatment.

In these methods, as for the organic acids, dextran, sourdough, and other components used in the present invention, kinds, conditions, methods for adding to a food product, and the amount added are similar to those of the methods for adding the food property improving agent of the present invention to a food product. In addition, the effects of these methods are similar to those when the food property improving agent of the present invention is added.

EXAMPLES

In the following, the present invention will be explained in detail in referring to examples, but the technical scope of the present invention is not limited to the examples.

Example 1: Sponge and dough method (1)

(1) Preparation of the food property improving agent

Two thousand gram of water was added to 2000 g of weak flour (commercial name: Angel, produced by TOKYO SEIFUN Co., Ltd.), and a wheat flour solution was obtained.

A test solution 1, a test solution 2, and a comparison solution 1 were prepared at the blending amounts listed in table 1 described below. Specifically, salt, dextran, and glacial acetic acid (KISHIDA CHEMICAL Co., Ltd., hereinafter, the same manufacturer) were added as needed and mixed to the wheat flour solution for the preparation. The dextran used had the average molecular weight (Mw) of 1,500,000 to 2,800,000 (produced by Sigma-Aldrich).

The value of pH of the sample obtained was measured by the glass electrode method. In addition, the amount of acetic acid was measured by the organic acid analysis using high performance liquid chromatography. Specifically, the test solution or comparison solution diluted 5 times by ion exchanged water was subjected to centrifugal separation (at 10000 rpm for 5 minutes), and 1 mL of the supernatant was separately collected. Then, 20 $\mu$L of 20% sulfosalicylic acid was added to the collected supernatant with stirring. The resultant mixture was passed through a 0.45 $\mu$m filter and then the measurement was carried out using high performance liquid chromatography under the following conditions.

Column: Organic Acid Column (7.8 $\times$ 300 mm) Waters Column temperature: 40°C
Solvent: A buffer phase (9.51 g of p-toluenesulfonic acid is dissolved in distilled water to a total of 100 mL), and B moving phase (9.51 g of p-toluenesulfonic acid, 41.85 g of Bis-Tris, and 0.29 g of EDTA-2Na are dissolved in distilled water to a total of 100 mL)
Flow rate: 0.8 mL/minute for A and B
Detector: RI detector

[Table 1]

Table 1

|  | Comparison solution 1 | Test solution 1 | Test solution 2 |
|---|---|---|---|
| Wheat flour solution | 900 g | 880 g | 860 g |
| Salt | 50 g | 50 g | 50 g |
| Dextran | 50 g | 50 g | 50 g |
| Glacial acetic acid | 0 g | 20 g | 40 g |

(2) Preparation of dough and toast bread

In accordance with the blending amounts listed in Table 2 below and production steps listed in Table 3 below, sponge dough and kneaded dough were prepared and then toast bread was prepared.

Specifically, flour (strong flour), yeast (Dia yeast, produced by Kirin Kyowa Foods Company, Ltd., hereinafter, the same manufacturer), yeast food (Pandya C500, produced by Kirin Kyowa Foods Company, Ltd., hereinafter, the same manufacturer) and water were kneaded (mixed), and then sponge dough was obtained. Wheat flour (strong flour), salt, granulated sugar, powdered skim milk, and test solution 1, test solution 2 or comparison solution 1 was added to this sponge dough and the resultant mixture was kneaded for 7 minutes (at low speed for 3 minutes, at middle speed for 3 minutes, and at high speed for 1 minute). Further, shortening was added, the kneading treatment was carried out at the kneading temperature of 27°C, and then the kneaded dough was obtained.

The kneaded dough obtained was subjected to a floor time treatment at 28°C for 20 minutes, and then divided into parts each weighing 220 g. After a bench time for 20 minutes, each part was formed by putting in a pullman mold. The formed dough was subjected to a final fermentation treatment for 50 minutes under the conditions of 38°C and 85% humidity. Then, baking was carried out using a reel oven at 220°C for 30 minutes to prepare toast bread(test block 1, test block 2, and comparison block 1).

[Table 2]

Table 2

|  |  | Comparison block 1 | Test block 1 | Test block 2 |
|---|---|---|---|---|
| Sponge dough | Strong flour | 70 part | 70 part | 70 part |
|  | Yeast | 2 part | 2 part | 2 part |
|  | Yeast food | 0.1 part | 0.1 part | 0.1 part |
|  | Water | 43 part | 43 part | 43 part |
| Kneaded dough | Strong flour | 30 part | 30 part | 30 part |
|  | Salt | 1.75 part | 1.75 part | 1.75 part |
|  | Granulated sugar | 5 part | 5 part | 5 part |
|  | Powdered skim milk | 2 part | 2 part | 2 part |
|  | Shortening | 5 part | 5 part | 5 part |
|  | Water | 23 part | 23 part | 23 part |
|  | Test solution 1 | 0 part | 5 part | 0 part |
|  | Test solution 2 | 0 part | 0 part | 5 part |
|  | Comparison solution 1 | 5 part | 0 part | 0 part |
| * unit: "part" indicates mass% | | | | |

[Table 3]

Table 3

| Steps | | |
|---|---|---|
| Sponge dough | Mixing | Low speed for 3 minutes, middle speed for 2 minutes |
|  | Kneading temperature | 24°C |
|  | Fermentation conditions | 28°C, 4 hours |
| Kneaded dough | Mixing conditions | Low speed for 3 minutes, middle speed for 3 minutes, high speed for 1 minute, (addition of oils and fats), low speed for 2 minutes, middle speed for 3 minutes, and high speed for 3 minutes |
|  | Kneading temperature | 27°C |
|  | Floor conditions | 28°C, 20 minutes |
|  | Division | 220 g × 4 |
|  | Bench time | 20 minutes |
|  | Forminq | Pullman mold |
|  | Final proof conditions | 38°C, 85%RH |
|  | Baking conditions | Upper fire at 210°C, and lower fire at 200°C, for 30 minutes |

Sensory evaluations were carried out on the toast bread obtained (test block 1, test block 2, and comparison block 1). In addition, for each toast bread, kneaded dough after the bench time treatment was loaded on the molder for breadmaking, the length was measured and compared with each other, and the dough extensibility of the kneaded dough was also evaluated.

Further, water having 5 times mass as the mass of the bread dough after the baking treatment was added to the bread dough and homogenized to obtain a turbid solution, and the pH of the turbid solution was measured by the

11

glass electrode method as the pH of the bread dough.

(3) Sensory evaluation

The sensory evaluations were carried out by 10 trained specialized panelists. They evaluated the following items for the prepared toast: "sweet smell", "alcohol smell", "acid smell", "taste", "softness", "crispness", "moist texture", and "meltability" according to the following criteria, and the average of the results for each item are shown. The sensory evaluation was carried out after 24 hours of the baking.

(Evaluation criteria of the sensory test)

The levels of "sweet smell", "alcohol smell", "acid smell", and "taste" were expressed in terms of intensity, and the evaluation was carried out by a seven-point evaluation method using the following intensity criteria.

7 : very strong
6 : strong
5 : slightly strong
4 : neither strong nor weak (intermediate)
3 : slightly weak
2 : weak
1 : very weak

The levels of "softness", "crispness", "moist texture", and "meltability" were expressed in terms of intensity, and the evaluation was carried out by a seven-point evaluation method using the following intensity criteria.

7 : very preferable
6 : preferable
5 : slightly preferable
4 : neither preferable nor unpreferable (intermediate) 3 : slightly unpreferable
2 : unpreferable
1 : very unpreferable

Results (average values) of the sensory evaluations are shown in Table 4.

(4) Evaluation of dough extensibility

As for the dough extensibility, very good extensibility in kneaded dough was represented by "++", good extensibility was represented by "+", bad extensibility was represented by "-", and neither good nor bad extensibility was represented by "±". Evaluation results of dough extensibility are shown in Table 4.

[Table 4]

Table 4

| | | Comparison block 1 | Test block 1 | Test block 2 |
|---|---|---|---|---|
| Food property improving agent | Food property improving agent | Comparison solution 1 | Test solution 1 | Test solution 2 |
| | pH | 6.21 | 3.66 | 3.46 |
| | Amount of dextran (mass%) | 5% | 5% | 5% |
| | Average molecular weight of dextran | 1,500,000 to 2,800,000 | 1,500,000 to 2,800,000 | 1,500,000 to 2,800,000 |
| | Amount of acetic acid (ppm) | 0 | 18430 | 39778 |

(continued)

|  | | Comparison block 1 | Test block 1 | Test block 2 |
|---|---|---|---|---|
| Bread dough | Amount of food property improving agent added (mass%) | 5% | 5% | 5% |
| | Dough extensibility | - | ++ | + |
| | Dough pH | 5.2 | 4.9 | 4.8 |
| Sensory evaluation (flavor) | Sweet smell | 4.2 | 3.8 | 3.7 |
| | Acid smell | 4.1 | 4.5 | 5.1 |
| | Alcohol smell | 4.1 | 3.8 | 4.1 |
| | Taste | 4.1 | 4.5 | 4.8 |
| Sensory evaluation (texture) | Softness | 4.2 | 5.1 | 4.8 |
| | Moist texture | 4.1 | 4.7 | 4.9 |
| | Crispness | 4.4 | 4.2 | 4.3 |
| | Meltability | 4.1 | 4.4 | 4.6 |
| Sensory evaluation comments | | Good chewing resistance | Soft and moist | Soft and moist |

As shown in Table 4, texture improvement effects were observed particularly at "softness" and "moist texture" in the test block 1 and the test block 2 compared with the comparison block 1.

Example 2: Sponge and dough method (2): Kinds of organic acids

(1) Preparation of food property improving agent

One kilogram of water was added to 1 kg of strong flour (commercial name: Camellia, obtained from Nisshin Seifun Group Inc.), and further 50 g of lactic acid bacterium starter (TK starter, obtained from Pacific YOKO CO., LTD.) was added to the strong flour. The mixture obtained was fermented at 28°C for 20 hours and the resultant material was referred to as the sourdough. The pH of the sourdough obtained was 3.85, the amount of lactic acid was 8597 ppm, and the amount of acetic acid was 1094 ppm.
The amount of lactic acid was measured using high performance liquid chromatography.
After 5 g of salt and 5 g of dextran (average molecular weight 2,000,000, produced by Sigma-Aldrich) were added to 88 g of the sourdough obtained, 2 g of glacial acetic acid (acetic acid) was added as the organic acid and the resultant mass was mixed. The mixture obtained was used as the food property improving agent (test solution 3).
A test solution 4 and a test solution 5 were obtained similarly to the test solution 3 except that acetic acid was replaced by succinic acid and fumaric acid, respectively. In addition, a comparison solution 3 and a comparison solution 4 were obtained similarly to the test example 3 except that acetic acid was replaced by lactic acid and citric acid, respectively. Further, a comparison solution 2 was obtained similarly to the test solution 3 except that acetic acid was replaced by water.
In the test solutions and the comparison solutions obtained, the amounts of lactic acid, citric acid, acetic acid, fumaric acid and succinic acid were measured. Here, the amounts of citric acid fumaric acid and succinic acid were measured using high performance liquid chromatography.

(2) Preparation of dough and toast bread

In accordance with the blending amounts listed in Table 5 below and the production steps listed in Table 3 below, sponge dough and kneaded dough were prepared and then toast bread was prepared (test blocks 3 to 5, and comparison blocks 2 to 4).

[Table 5]

Table 5

| Blend | | Comparison block 2 | Comparison blocks 3 and 4 | Test blocks 3 to 5 |
|---|---|---|---|---|
| Sponge dough | Strong flour | 70 part | 70 part | 70 part |
| | Yeast | 2 part | 2 part | 2 part |
| | Yeast food | 0.1 part | 0.1 part | 0.1 part |
| | Water | 43 part | 43 part | 43 part |
| Kneaded dough | Strong flour | 30 part | 30 part | 30 part |
| | Salt | 1.75 part | 1.75 part | 1.75 part |
| | Granulated sugar | 5 part | 5 part | 5 part |
| | Powdered skim milk | 2 part | 2 part | 2 part |
| | Shortening | 5 part | 5 part | 5 part |
| | Water | 23 part | 23 part | 23 part |
| | Test solution | 0 part | 0 part | 5 part |
| | Comparison solution | 5 part | 5 part | 0 part |
| * unit: "part" indicates mass% | | | | |

For the toast bread obtained (test blocks 3 to 5, and comparison blocks 2 to 4), the pH of dough was measured, and the sensory evaluations and the evaluations of dough extensibility were carried out in accordance with the methods described in (3) and (4), respectively, in the above-described example 1. Results are shown in Table 6.

[Table 6]

Table 6

| | | Comparison block 2 | Comparison block 3 | Comparison block 4 | Test block 3 | Test block 4 | Test block 5 |
|---|---|---|---|---|---|---|---|
| Food property improving agent | Organic acid | None | Lactic acid 2% | Citric acid 2% | Acetic acid 2% | Fumaric acid 2% | Succinic acid 2% |
| | Amount of dextran (mass%) | 5% | 5% | 5% | 5% | 5% | 5% |
| | pH | 3.59 | 3.33 | 2.80 | 3.01 | 3.01 | 3.15 |
| | Amount of acetic acid (ppm) | 962 | 1094 | 1021 | 21558 | 1094 | 1113 |
| | Amount of lactic acid (ppm) | 7565 | 24085 | 8197 | 7976 | 8201 | 9640 |
| | Amount of fumaric acid (ppm) | - | - | - | - | 20323 | - |
| | Amount of succinic acid (ppm) | - | - | - | - | - | 19359 |
| | Amount of citric acid (ppm) | - | - | 20864 | - | - | - |

(continued)

|  | | Comparison block 2 | Comparison block 3 | Comparison block 4 | Test block 3 | Test block 4 | Test block 5 |
|---|---|---|---|---|---|---|---|
| Bread dough | Amount of food property improving agent added (mass%) | 5% | 5% | 5% | 5% | 5% | 5% |
| | pH | 5.2 | 5.0 | 4.8 | 4.9 | 4.8 | 5.0 |
| | Dough extensibility | ± | + | + | + | + | + |
| Sensory evaluation (flavor) | Sweet smell | 4.4 | 3.8 | 4.1 | 4.2 | 4.8 | 4.1 |
| | Alcohol smell | 4.1 | 4.4 | 4.4 | 4.3 | 4.4 | 4.3 |
| | Acid smell | 4.1 | 4.1 | 4.4 | 4.8 | 3.9 | 4.8 |
| | Taste | 4.4 | 4.3 | 4.3 | 5.0 | 4.3 | 4.8 |
| Sensory evaluation (texture) | Softness | 4.4 | 4.3 | 4.2 | 5.3 | 4.7 | 5.1 |
| | Moist texture | 4.5 | 4.3 | 4.2 | 5.3 | 4.6 | 5.1 |
| | Crispness | 4.5 | 4.4 | 4.1 | 4.3 | 4.6 | 4.6 |
| | Meltability | 4.3 | 4.4 | 3.9 | 4.3 | 4.1 | 4.4 |

As shown in Table 6, the sensory evaluation revealed that the test blocks 3 to 5 containing acetic acid, fumaric acid and succinic acid show effects in terms of "softness" and "moist texture", and particularly, larger effects are exhibited in the test blocks 3 and 5 where acetic acid and succinic acid were added had higher effects.

Example 3: Sponge and dough method (3): Use of merely dextran and Combined use of dextran and acetic acid

(1) Preparation of food property improving agent

One kilogram of water was added to 1 kg of strong flour (commercial name: Camellia, obtained from Nisshin Seifun Group Inc.), and further 50 g of lactic acid bacterium starter (TK starter, obtained from Pacific YOKO CO., LTD.) was added to the strong flour. The mixture obtained was fermented at 28°C for 20 hours and the resultant material was referred to as the sourdough. The pH of the sourdough obtained was 3.85, the amount of lactic acid was 8597 ppm, and the amount of acetic acid was 1094 ppm.

After 50 g of dextran (average molecular weight 1,500,000 to 2,800,000, produced by Sigma-Aldrich) was added to 880 g of sourdough, 20 g of glacial acetic acid and 50 g of salt were added and the resultant mass was mixed. The mixture obtained was used as the food property improving agent (test solution 6) containing sourdough.

In addition, a comparison solution 5 was prepared by adding 50 g of dextran (average molecular weight 1,500,000 to 2,800,000, produced by Sigma-Aldrich) to 950 g of water and dissolving dextran in water.

(2) Preparation of dough and toast bread

In accordance with the blending amounts listed in Table 7 below and the production steps listed in Table 3 in the example 1, sponge dough and kneaded dough were prepared and then toast bread was prepared (comparison block 5 and test block 6).

[Table 7]

Table 7

|  |  |  | Comparison block 5 | Test block 6 |
|---|---|---|---|---|
|  | Sponge dough | Strong flour | 70 part | 70 part |
|  |  | Yeast | 2 part | 2 part |
|  |  | Yeast food | 0.1 part | 0.1 part |
|  |  | Water | 43 part | 43 part |
|  | Kneaded dough | Strong flour | 30 part | 30 part |
|  |  | Salt | 2 part | 1.75 part |
|  |  | Granulated sugar | 5 part | 5 part |
|  |  | Powdered skim milk | 2 part | 2 part |
|  |  | Shortening | 5 part | 5 part |
|  |  | Water | 23 part | 23 part |
|  |  | Test solution 6 | 0 part | 5 part |
|  |  | Comparison solution 5 | 5 part | 0 part |
| * unit: "part" indicates mass% | | | | |

For the toast bread obtained (comparison block 5 and test block 6), the pH of dough was measured, and the sensory evaluations and the evaluations of dough extensibility were carried out in accordance with the methods described in (3) and (4), respectively, in the above-described example 1. Results are shown in Table 8.

[Table 8]

Table 8

|  |  | Comparison block 5 | Test block 6 |
|---|---|---|---|
| Food property improving agent | pH | 6.8 | 3.0 |
|  | Amount of dextran (mass%) | 5% | 5% |
|  | Molecular weight of dextran | 1,500,000 to 2,800,000 | 1,500,000 to 2,800,000 |
|  | Amount of acetic acid (ppm) | - | 21558 |
|  | Amount of lactic acid (ppm) | - | 7976 |
| Bread dough | Amount of food property improving agent added (mass%) | 5% | 5% |
|  | Dough extensibility | - | ++ |
|  | Dough pH | 5.2 | 4.9 |
| Sensory evaluation (flavor) | Sweet smell | 4.4 | 4.2 |
|  | Acid smell | 4.1 | 4.8 |
|  | Alcohol smell | 4.1 | 4.3 |
|  | Taste | 4.4 | 5.0 |

(continued)

| | | Comparison block 5 | Test block 6 |
|---|---|---|---|
| Sensory evaluation (texture) | Softness | 4.4 | 5.3 |
| | Moist texture | 4.5 | 5.3 |
| | Crispness | 4.3 | 4.3 |
| | Meltability | 4.3 | 4.3 |
| Sensory evaluation comments | | Softness without firmness, slight pulpiness | Satisfactory moist texture, and strong taste |

As shown in Table 8, the comparison block 5 had poor evaluation results for extensibility, texture of dough, and the like. In contrast, the test block 6 had favorable evaluation results for extensibility of dough, "softness", "moist texture" and the like.

Example 4: Sponge and dough method (4): Molecular weight of dextran

(1) Preparation of food property improving agent

One kilogram of water was added to 1 kg of strong flour (commercial name: Camellia, obtained from Nisshin Seifun Group Inc.), and further 50 g of lactic acid bacterium starter (TK starter, obtained from Pacific YOKO CO., LTD.) was added to the strong flour. The mixture was fermented at 28°C for 20 hours and the resultant material was referred to as the sourdough. The pH of the obtained sourdough was 3.85, the amount of lactic acid was 8597 ppm, and the amount of acetic acid was 1094 ppm.

After 10 g of glacial acetic acid and 50 g of salt were added to 890 g of the sourdough, 50 g of various kinds of dextrans having different average molecular weights were added and the resultant mass was mixed. The mixture obtained was used as the food property improving agent (test solutions 7 to 9). As for the various dextrans, a dextran having an average molecular weight of 60,000 (produced by Wako Pure Chemical Industries, Ltd.) (test solution 7), a dextran having an average molecular weight of 200,000 to 300,000 (produced by Wako Pure Chemical Industries, Ltd.) (test solution 8), and a dextran having an average molecular weight of 1,500,000 to 2,800,000 (produced by Sigma-Aldrich) (test solution 9) were used.

In addition, a comparison solution 6 was prepared by adding 10 g of glacial acetic acid and 50 g of salt to 940 g of the sourdough.

(2) Preparation of dough and toast bread

In accordance with the blending amounts listed in Table 9 below and the production steps listed in Table 3 below, sponge dough and kneaded dough were prepared and then toast bread was prepared (test blocks 7 to 9, comparison block 6, and no-addition block 1).

[Table 9]

Table 9

| | | No-addition block 1 | Comparison block 6 | Test block 7 | Test block 8 | Test block 9 |
|---|---|---|---|---|---|---|
| Sponge dough | Strong flour | 70 part | 70 part | 70 part | 70 part | 70 part |
| | Yeast | 2 part | 2 part | 2 part | 2 part | 2 part |
| | Yeast food | 0.1 part | 0.1 part | 0.1 part | 0.1 part | 0.1 part |
| | Water | 43 part | 43 part | 43 part | 43 part | 43 part |

(continued)

| | | No-addition block 1 | Comparison block 6 | Test block 7 | Test block 8 | Test block 9 |
|---|---|---|---|---|---|---|
| Kneaded dough | Strong flour | 30 part | 30 part | 30 part | 30 part | 30 part |
| | Salt | 2 part | 1.75 part | 1.75 part | 1.75 part | 1.75 part |
| | Granulated sugar | 5 part | 5 part | 5 part | 5 part | 5 part |
| | Powdered skim milk | 2 part | 2 part | 2 part | 2 part | 2 part |
| | Shortening | 5 part | 5 part | 5 part | 5 part | 5 part |
| | Water | 25 part | 23 part | 23 part | 23 part | 23 part |
| | Test solution 7 | 0 part | 0 part | 5 part | 0 part | 0 part |
| | Test solution 8 | 0 part | 0 part | 0 part | 5 part | 0 part |
| | Test solution 9 | 0 part | 0 part | 0 part | 0 part | 5 part |
| | Comparison solution 6 | 0 part | 5 part | 0 part | 0 part | 0 part |
| * unit: "part" indicates mass% | | | | | | |

For the toast bread obtained (test blocks 7 to 9, comparison block 6 and no-addition block 1), the pH of dough was measured, and the sensory evaluations and the evaluations of dough extensibility were carried out in accordance with the methods described in (3) and (4), respectively in the example 1. Results are shown in Table 10.

[Table 10]

Table 10

| | | No-addition block 1 | Comparison block 6 | Test block 7 | Test block 8 | Test block 9 |
|---|---|---|---|---|---|---|
| Food property improving agent | pH | - | 3.1 | 3.1 | 3.1 | 3.1 |
| | Amount of dextran (mass%) | - | 0% | 5% | 5% | 5% |
| | Molecular weight of dextran | - | None | 60,000 | 200,000 to 300,000 | 1,500,000 to 2,800,000 |
| | Amount of acetic acid (ppm) | - | 12438 | 11997 | 11324 | 12438 |
| | Amount of lactic acid (ppm) | - | 7043 | 5474 | 5166 | 5920 |
| Bread dough | Amount of food property improving agent added (mass%) | 0% | 5% | 5% | 5% | 5% |
| | Dough extensibility | ± | + + | + + | + + | + + |
| | Dough pH | 5.2 | 5.0 | 5.0 | 5.0 | 5.0 |

(continued)

| | | No-addition block 1 | Comparison block 6 | Test block 7 | Test block 8 | Test block 9 |
|---|---|---|---|---|---|---|
| Sensory evaluation (flavor) | Sweet smell | 4.0 | 4.5 | 4.0 | 3.6 | 4.2 |
| | Acid smell | 4.0 | 4.1 | 4.3 | 4.4 | 4.6 |
| | Alcohol smell | 4.0 | 3.9 | 4.1 | 4.1 | 3.9 |
| | Taste | 4.0 | 4.6 | 4.9 | 4.6 | 4.4 |
| Sensory evaluation (texture) | Softness | 4.0 | 3.5 | 3.8 | 4.6 | 4.7 |
| | Moist texture | 4.0 | 4.1 | 4.6 | 4.2 | 4.6 |
| | Crispness | 4.0 | 4.2 | 4.1 | 4.2 | 4.2 |
| | Meltability | 4.0 | 4.4 | 4.0 | 4.4 | 4.5 |
| Sensory evaluation comments | | | Elastic, heavy texture, and sweet flavor | Moist texture | Soft texture, and good meltability | Very soft |

As shown in Table 10, the slices of bread of the test blocks 7 to 9 exhibited higher effects for "softness", "moist texture", and the like, compared with the no-addition block 1 and the comparison block 6. In particular, texture and the like in the test block 9 were superior.

Example 5: Straight method

In accordance with the blending amounts listed in Table 11 below and the production steps listed in Table 12 below, kneaded dough was prepared and then toast bread was prepared, using the test solutions 7 to 9 and the comparison solution 6 prepared in the above-described example 4.

The kneaded dough obtained was subjected to a floor time treatment at 27°C for 60 minutes, and then divided into parts each weighing 220 g. After a bench time for 20 minutes, each part was formed by putting in a pullman mold. The formed dough was subjected to a final fermentation treatment for 60 minutes under the conditions of 38°C and 85% humidity. Then, baking was carried out using a reel oven at 220°C for 30 minutes to prepare toast bread (test block 10 to 12, comparison block 7 and no-addition block 2).

[Table 11]

Table 11

| Blend | No-addition block 2 | Comparison block 7 | Test block 10 | Test block 11 | Test block 12 |
|---|---|---|---|---|---|
| Strong flour | 100 part | 100 part | 100 part | 100 part | 100 part |
| Salt | 2 part | 1.75 part | 1.75 part | 1.75 part | 1.75 part |
| Yeast | 3 part | 3 part | 3 part | 3 part | 3 part |
| Yeast food | 0.1 part | 0.1 part | 0.1 part | 0.1 part | 0.1 part |
| Granulated sugar | 5 part | 5 part | 5 part | 5 part | 5 part |
| Powdered skim milk | 2 part | 2 part | 2 part | 2 part | 2 part |
| Shortening | 0 part | 0 part | 5 part | 5 part | 5 part |
| Water | 25 part | 23 part | 23 part | 23 part | 23 part |
| Test solution 7 | 0 part | 0 part | 5 part | 0 part | 0 part |

(continued)

| Blend | No-addition block 2 | Comparison block 7 | Test block 10 | Test block 11 | Test block 12 |
|---|---|---|---|---|---|
| Test solution 8 | 0 part | 0 part | 0 part | 5 part | 0 part |
| Test solution 9 | 0 part | 0 part | 0 part | 0 part | 5 part |
| Comparison solution 6 | 0 part | 5 part | 0 part | 0 part | 0 part |
| * unit: "part" indicates mass% | | | | | |

[Table 12]

Table 12

| Steps | |
|---|---|
| Mixing | Low speed for 3 minutes, middle speed for 3 minutes, high speed for 1 minute, (addition of oils and fats), low speed for 2 minutes, middle speed for 3 minutes, high speed for 7 minutes |
| Kneading temperature | 27°C |
| Floor conditions | 28°C, 60 minutes |
| Division | 220 g × 4 |
| Bench time | 20 minutes |
| Forming | Pullman mold |
| Final proof conditions | 38°C, 85%RH |
| Baking conditions | Upper fire at 210°C, lower fire at 200°C, 30 minutes |

For the toast bread obtained (test blocks 10 to 12, comparison block 7, and no-addition block 2), sensory evaluations and dough extensibility tests were carried out in accordance with the methods in (3) and (4), respectively, in the above-described example 1. The results are shown in Table 13.

[Table 13]

Table 13

| | | No-addition block 2 | Comparison block 7 | Test block 10 | Test block 11 | Test block 12 |
|---|---|---|---|---|---|---|
| Food property improving agent | pH | - | 3.1 | 3.1 | 3.1 | 3.1 |
| | Amount of dextran (mass%) | 0% | 0% | 5% | 5% | 5% |
| | Molecular weight of dextran | N/A | N/A | 60000 | 200,000 to 300,000 | 1,500,000 to 2,000,000 |
| | Amount of acetic acid (ppm) | N/A | 12438 | 11997 | 11324 | 12438 |
| | Amount of lactic acid (ppm) | N/A | 7043 | 5474 | 5166 | 5920 |
| Bread dough | Amount of food property improving agent added (mass%) | 0% | 5% | 5% | 5% | 5% |
| | Dough extensibility | ± | + + | + + | + + | + + |
| | Dough pH | 5.2 | 5,0 | 5.0 | 5.0 | 5.0 |
| Sensory evaluation (flavor) | Sweet smell | 4.0 | 4.5 | 4.6 | 3.6 | 4.6 |
| | Acid smell | 4.0 | 4.0 | 3.6 | 4.5 | 3.7 |
| | Alcohol smell | 4.0 | 4.1 | 3.6 | 4.4 | 3.7 |
| | Taste | 4.0 | 4.6 | 4.5 | 4.3 | 4.9 |
| Sensory evaluation (texture) | Softness | 4.0 | 4.1 | 4.1 | 4.4 | 5.2 |
| | Moist texture | 4.0 | 4.4 | 4.0 | 4.9 | 4.6 |
| | Crispness | 4.0 | 4.0 | 4.8 | 4.6 | 4.6 |
| | Meltability | 4.0 | 4.3 | 4.6 | 4.6 | 4.8 |
| Sensory evaluation comments | | | Slightly but particularly elastic, and heavy texture. Strong taste. | Satisfactory crispness and meltability | Good moist texture and satisfactory meltability | Good moist texture |

As shown in Table 13, compared with the no-addition block 2 and the comparison block 7, the straight method also yielded results in which the test block 10 exhibited satisfactory results for "crispness" and "meltability", and the test blocks 11 and 12 exhibited satisfactory results of slices of bread for "softness", "moist texture", "crispness", and "meltability". In particular, the test block 12 exhibited superior texture and the like.

Example 6: Sponge and dough method (5)

(1) Screening of sourdough

Screening of sourdough was carried out in accordance with the presence or absence of the ability of producing extracellular polysaccharides by the following method.

21

Preparation of sourdough

To 100 g of rye flour (commercial name: Alle Fein, produced by Nisshin Seifun Group Inc.), 4 g of malts (commercial name: Euromalt, obtained from Nichifutsu Shoji Co., Ltd.) and 120g of water were added and the resultant mixture was kneaded and cultured at 28°C for 24 hours. One hundred gram of wheat flour (commercial name: La Tradition Francaise, obtained from Okumoto Flour Milling Co., Ltd.) and 100 g of water were added to 100 g of the fermented dough formed after the culturing treatment (referred to as 1 day sourdough), the resultant mixture was kneaded and cultured at 28°C for 24 hours. The same procedure was repeatedly performed on the fermented dough obtained until the 6 day sourdough was obtained, and sourdoughs, 1 day sourdough through 6 day sourdough, were obtained as samples of lactic acid bacteria.

Screening in accordance with the presence or absence of the ability of producing extracellular polysaccharides

Each sample of 1 day to 6 day sourdough was stepwisely diluted by 0.85% saline, and the diluted samples were cultured using the below-described k-MRS agar medium and BCP agar medium (commercial name: Plate Count Agar with BCP "Nissui", Nissui Pharmaceutical Co., Ltd.) at 28°C for 48 hours.

In order to check the ability of producing extracellular polysaccharides of colonies formed on the k-MRS agar medium and the BCP agar medium, each bacterium was subjected to stab culture treatment on the following agar medium A at 28°C for 24 hours. After the stab culture treatment, production of extracellular polysaccharides of each bacterium was visually observed to perform screening of samples (lactic acid bacteria) for the ability of producing extracellular polysaccharides.

As to the k-MRS agar medium, 10 g of peptone (commercial name: Protease Peptone No.3, produced by Becton Dickinson), 2 g of beef extract (commercial name: Wako Beef Extract, Ehrlich, produced by Wako Pure Chemical Industries, Ltd.), 7 g of yeast extract (commercial name: Bacto Yeast Extract, produced by Becton Dickinson), 7 g of glucose (produced by KISHIDA CHEMICAL Co., Ltd.), 7 g of maltose (produced by KISHIDA CHEMICAL Co., Ltd.), 7 g of fructose (produced by KISHIDA CHEMICAL Co., Ltd.), 2 g of sodium gluconate (produced by Wako Pure Chemical Industries, Ltd.), 1 g of Tween 80 (produced by Wako Pure Chemical Industries, Ltd.), 2.5 g of dipotassium hydrogen phosphate (produced by KISHIDA CHEMICAL Co., Ltd.), 5 g of sodium acetate anhydrous (produced by KISHIDA CHEMICAL Co., Ltd.), 5 g of diammonium hydrogen citrate (produced by KISHIDA CHEMICAL Co., Ltd.), 200 mg of magnesium sulfate heptahydrate (produced by KISHIDA CHEMICAL Co., Ltd.), 50 mg of manganese sulfate hydrate (produced by KANTO CHEMICAL Co., Inc.), 0.5 g of L-cysteine (produced by NACALAI TESQUE, INC.), and 20 g of agar (commercial name: Ina Agar S-6, produced by Ina Food Industry Co., Ltd.) each were weighed and dissolved in 1000 mL of water. The resultant mixture was sterilized in an autoclave at 121°C for 15 minutes, and then used.

As to the agar medium A, 20 g of sucrose (produced by KISHIDA CHEMICAL Co., Ltd.), 20 g of yeast extract, 10 g of peptone (commercial name: Bacto Peptone, produced by Becton Dickinson), 5 g of sodium acetate trihydrate (produced by KISHIDA CHEMICAL Co., Ltd.), 200 mg of magnesium sulfate, 10 mg of manganese sulfate, 10 mg of iron sulfate (produced by KANTO CHEMICAL Co., Inc.), 10 mg of sodium chloride (produced by KISHIDA CHEMICAL Co., Ltd.), 500 mg of Tween 80, and 12 g of agar each were weighed and dissolved in 1000 mL of water. The resultant mixture was sterilized at 121°C for 15 minutes, and then used.

(2) Preparation of dough and toast bread

Lactic acid bacterium strain of Weicella confusa having the ability of producing extracellular polysaccharides was obtained by screening, inoculated on the following MRS medium, and subjected to pre-culture treatment at 28°C for 24 hours, to obtain a pre-cultured solution.

As to the MRS liquid medium, 10 g of peptone (commercial name: Protease Peptone No.3, produced by Becton Dickinson), 10 g of beef extract (commercial name: Wako Beef Extract, Ehrlich, produced by Wako Pure Chemical Industries, Ltd.), 5 g of yeast extract (commercial name: Bacto Yeast Extract, produced by Becton Dickinson), 20 g of glucose (produced by KISHIDA CHEMICAL Co., Ltd.), 1 g of Tween 80 (produced by Wako Pure Chemical Industries, Ltd.), 2 g of dipotassium hydrogen phosphate (produced by KISHIDA CHEMICAL Co., Ltd.), 5 g of sodium acetate anhydrous (produced by KISHIDA CHEMICAL Co., Ltd.), 2 g of diammonium hydrogen citrate (produced by KISHIDA CHEMICAL Co., Ltd.), 0.58 mg of magnesium sulfate heptahydrate (produced by KISHIDA CHEMICAL Co., Ltd.), 0.28 mg of manganese sulfate hydrate (produced by KANTO CHEMICAL Co., Inc.), and 15 g of agar (commercial name: Ina Agar S-6, produced by Ina Food Industry Co., Ltd.) each were weighed and dissolved in 1000 mL of water. The resultant mixture was sterilized in an autoclave at 121°C for 15 minutes, and then used.

Eight hundred gram of water, 220 g of sucrose, and 100 g of the pre-cultured solution were added to 680 g of wheat flour (strong flour) (commercial name: Angel, produced by TOKYO SEIFUN Co., Ltd.). The pH of the mix solution obtained was adjusted 7.0 by the addition of sodium carbonate. The resultant mix solution was fermented at 28°C for 24 hours.

The food product improving agent (test solution 13) was obtained by adding 100 g of salt and 20 g of glacial acetic acid to the fermented mix solution.

Based on the blending amounts listed in Table 14 and the production steps listed in Table 3 above, sponge dough and kneaded dough were prepared and then toast bread was prepared (test block 13).

[Table 14]

Table 14

| | | Test block 13 |
|---|---|---|
| Sponge dough | Strong flour | 70 part |
| | Yeast | 2 part |
| | Yeast food | 0.1 part |
| | Water | 43 part |
| Kneaded dough | Strong flour | 30 part |
| | Salt | 1.75 part |
| | Granulated sugar | 5 part |
| | Powdered skim milk | 2 part |
| | Shortening | 5 part |
| | Water | 23 part |
| | Test solution 13 | 5 part |
| * unit: "part" indicates mass% | | |

The toast bread obtained (test block 13) was subjected to the sensory evaluation in accordance with the method described in the example 1 (3). The results are shown in Table 15.

[Table 15]

Table 15: Sensory evaluation

| | | Test block 13 |
|---|---|---|
| Food property improving agent | Kind of lactic acid bacterium | W. confusa |
| | Amount of extracellular polysaccharide (mass%) | 2.1 |
| | Amount of dextran (mass%) | 0.67 |
| | pH | 3.34 |
| | Amount of acetic acid (ppm) | 9881 |
| Sensory evaluation (flavor) | Sweet smell | 4.8 |
| | Acid smell | 4.3 |
| | Alcohol smell | 4.2 |
| | Taste | 5.0 |

(continued)

|  |  | Test block 13 |
|---|---|---|
| Sensory evaluation (texture) | Softness | 4.7 |
|  | Moist texture | 4.8 |
|  | Crispness | 4.3 |
|  | Meltability | 4.8 |
| Sensory evaluation comments | | Good taste, and satisfactory meltability |

As shown in Table 15, the test block 13 exhibited very preferable results for taste, moist texture, and meltability.

**Claims**

1. A food property improving agent comprising one or more kinds of organic acids selected from a group consisting of acetic acid, fumaric acid, and succinic acid at a total of 0.5 to 5 mass% and dextran at 0.5 to 15 mass%.

2. The food property improving agent according to Claim 1, wherein an average molecular weight of the dextran is 60,000 to 4,000,000.

3. The food property improving agent according to claim 1 or 2, containing sourdough.

4. The food property improving agent according to claim 3, wherein the sourdough is obtained by lactic acid fermentation performed by one or more kinds of lactic acid bacteria selected from the group consisting of genus Weissella, genus Pediococcus and genus Leuconostoc.

5. A food dough,

   a) to which the food property improving agent according to any one of claims 1 to 4 is added, or
   b) containing one or more kinds of organic acids selected from the group consisting of acetic acid, fumaric acid and succinic acid at a total of 0.025 to 0.5 mass% in baker's percentage, and dextran at 0.025 to 1.5 mass% in baker's percentage.

6. A food product obtained by heating the dough according to claim 5.

7. A method for producing a food product in which physical properties of the food product are improved, comprising a step of adding the food property improving agent according to any one of claims 1 to 4 to the food product.

8. A method for improving physical properties of a food product, comprising adding the food property improving agent according to any one of claims 1 to 4 to the food product.

**Patentansprüche**

1. Lebensmitteleigenschaft-verbesserndes Agens, umfassend eine oder mehrere Art(en) an organischen Säuren, ausgewählt aus einer Gruppe bestehend aus Essigsäure, Fumarsäure und Bernsteinsäure, mit einem Gesamt-Massenprozentanteil von 0,5 bis 5, und Dextran mit einem Gesamt-Massenprozentanteil von 0,5 bis 15.

2. Lebensmitteleigenschaft-verbesserndes Agens gemäß Anspruch 1, wobei ein durchschnittliches Molekulargewicht des Dextrans 60000 bis 4000000 beträgt.

3. Lebensmitteleigenschaft-verbesserndes Agens gemäß Anspruch 1 oder 2, Sauerteig enthaltend.

4. Lebensmitteleigenschaft-verbesserndes Agens gemäß Anspruch 3, wobei der Sauerteig erhalten wird durch Milchsäurefermentation, welche bewirkt wird durch eine oder mehrere Art(en) von Milchsäurebakterien, ausgewählt aus der Gruppe bestehend aus dem Genus Weissella, dem Genus Pediococcus und dem Genus Leuconostoc.

5. Lebensmittel-Teig,

   a) zu welchem das Lebensmitteleigenschaft-verbesserndes Agens gemäß irgendeinem der Ansprüche 1 bis 4 hinzugefügt ist, oder
   b) eine oder mehrere Art(en) an organischen Säuren, ausgewählt aus der Gruppe bestehend aus Essigsäure, Fumarsäure und Bernsteinsäure, mit einem Gesamt-Massenprozentanteil von 0,025 bis 0,5 in Bäckerprozent, und Dextran mit einem Gesamt-Massenprozentanteil von 0,025 bis 1,5 in Bäckerprozent, enthaltend.

6. Lebensmittelprodukt, erhalten durch Erhitzen des Teigs gemäß Anspruch 5.

7. Verfahren zur Herstellung eines Lebensmittelprodukts, in welchem die physikalischen Eigenschaften des Lebensmittelprodukts verbessert sind, umfassend einen Schritt des Hinzufügens des Lebensmitteleigenschaft-verbessernden Agens gemäß irgendeinem der Ansprüche 1 bis 4 zu dem Lebensmittelprodukt.

8. Verfahren zum Verbessern der physikalischen Eigenschaften eines Lebensmittelprodukts, umfassend Hinzufügen des Lebensmitteleigenschaft-verbessernden Agens gemäß irgendeinem der Ansprüche 1 bis 4 zu dem Lebensmittelprodukt.


## Revendications

1. Agent d'amélioration de propriétés des aliments, comprenant un ou plusieurs type(s) d'acides organiques qui sont sélectionnés parmi un groupe qui est constitué par l'acide acétique, l'acide fumarique et l'acide succinique selon un total de 0,5 % à 5 % en masse, et du dextrane selon 0,5 % à 15 % en masse.

2. Agent d'amélioration de propriétés des aliments selon la revendication 1, dans lequel le poids moléculaire moyen du dextrane est compris entre 60 000 et 4 000 000.

3. Agent d'amélioration de propriétés des aliments selon la revendication 1 ou 2, contenant un levain.

4. Agent d'amélioration de propriétés des aliments selon la revendication 3, dans lequel le levain est obtenu au moyen d'une fermentation d'acide lactique qui est réalisée au moyen d'un ou de plusieurs type(s) de bactéries d'acide lactique qui sont sélectionnées parmi le groupe qui est constitué par le genre weissella, le genre pediococcus et le genre leuconostoc.

5. Pâte alimentaire,

   a) à laquelle l'agent d'amélioration de propriétés des aliments selon l'une quelconque des revendications 1 à 4 est ajouté ; ou
   b) contenant un ou plusieurs type(s) d'acides organiques qui sont sélectionnés parmi le groupe qui est constitué par l'acide acétique, l'acide fumarique et l'acide succinique selon un total de 0,025 % à 0,5 % en masse en termes de pourcentage de boulanger, et du dextrane selon 0,025 % à 1,5 % en masse en termes de pourcentage de boulanger.

6. Produit alimentaire obtenu en chauffant la pâte selon la revendication 5.

7. Procédé pour produire un produit alimentaire selon lequel des propriétés physiques du produit alimentaire sont améliorées, comprenant une étape d'ajout de l'agent d'amélioration de propriétés des aliments selon l'une quelconque des revendications 1 à 4 au produit alimentaire.

8. Procédé pour améliorer les propriétés physiques d'un produit alimentaire, comprenant l'ajout de l'agent d'amélioration de propriétés des aliments selon l'une quelconque des revendications 1 à 4 au produit alimentaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2012154079 A
- JP 2006180724 A
- JP H89872 A
- JP H638665 B
- EP 0790003 A
- US 2983613 A
- US 4109023 A
- US 3556805 A
- JP H1084846 B
- JP S63251036 A

### Non-patent literature cited in the description

- **ROSS, A. ; MCMASTER, G. ; TOM LINSON, J. ; CHEETHAM, N.** Effect of dextrans of differing molecular weights on the rheology of wheat flour doughs and the quality characteristics of pan and Arabic breads. *J. Sci. Food Agric.,* 1992, vol. 60, 91-98